# EUROPÄISCHE PATENTSCHRIFT

(11) **EP 1 790 752 B1**
(45) Veröffentlichungstag und Bekanntmachung des Hinweises auf die Patenterteilung: **15.03.2017**
(21) Anmeldenummer: 06121121.5
(22) Anmeldetag: 22.09.2006
(51) Int. Cl.: C23C 4/14, C23C 4/10, C23C 24/04

(54) **Thermischer Spritzwerkstoff, thermisch gespritzte Beschichtung, thermisches Spritzverfahren, sowie ein thermisch beschichtetes Werkstück**
Thermal spray material, sprayed coating, thermal spray method and coated component
Matériel pour pulvérisation thermique, revêtement pulverisé, méthode pour obtenir ce revêtement et composant revêtu

(30) Priorität: 24.11.2005 EP 05405662
(43) Veröffentlichungstag der Anmeldung: 30.05.2007
(73) Patentinhaber: Oerlikon Metco AG, Wohlen, 5610 Wohlen (CH)
(72) Erfinder: Refke, Dr. Arno, 5507 Mellingen (CH); Barbezat, Gérard, 8404 Winterthur (CH); Doesburg, Jacobus C., East Windsor CT Connecticut CT 06088 (US)
(74) Vertreter: Intellectual Property Services GmbH

(56) Entgegenhaltungen:
- EP-A- 0 167 723
- WO-A-98/37252
- US-A- 3 645 894
- US-A- 4 915 906
- US-A- 5 358 753
- US-A- 5 679 167
- US-A1- 2004 253 382
- PATENT ABSTRACTS OF JAPAN Bd. 013, Nr. 241 (C-604), 6. Juni 1989 (1989-06-06) & JP 01 052051 A (DAINIPPON TORYO CO LTD), 28. Februar 1989 (1989-02-28)

## Beschreibung

Die Erfindung betrifft einen thermischen Spritzwerkstoff, die Verwendung eines Werkstoffs zum Beschichten einer Oberfläche eines Werkstücks mittels eines thermischen Spritzverfahrens, eine thermisch gespritzte Beschichtung, ein thermisches Spritzverfahren, sowie ein thermisch beschichtetes Werkstück gemäss dem Oberbegriff des unabhängigen Anspruchs der jeweiligen Kategorie.

Die Beschichtung von Oberflächen verschiedenster Werkstücke hat in der industriellen Technik eine fast unübersehbare Zahl von Anwendungen und eine entsprechend hohe wirtschaftliche Bedeutung. Dabei können Beschichtungen aus sehr unterschiedlichen Gründen vorteilhaft auf die verschiedensten Substrate aufgebracht werden. Eine grosse Rolle spielen zum Beispiel Verschleissschutzschichten auf mechanisch stark belasteten Teilen wie zum Beispiel auf Laufflächen von Zylindern oder Kolbenringen von Verbrennungskraftmaschinen oder Kompressoren. An solche Teile werden neben der Verschleissfestigkeit auch weitere Anforderungen, wie gute Gleiteigenschaften, d.h. gute tribologische Eigenschaften oder auch ausgezeichnete Trockenlaufeigenschaften gestellt. Für solche und ähnliche Anforderungen haben sich insbesondere verschiedene thermische Spritzverfahren, vor allem die bekannten Plasmaspritzverfahren hervorragend bewährt.

Zur Erzeugung von Hartschichten auf hoch belasteten Werkzeugen, vor allem Span abhebende Werkzeuge wie Fräser, Bohrer usw. sind Beschichtungen hergestellt durch Lichtbogenverdampfung, PVD oder CVD Prozesse sehr erfolgreich eingesetzt worden. Gerade die Anwendung der zuletzt genannten Prozesse ist aber auch auf ganz anderen Gebieten sehr weit verbreitet, z.B. zum Beschichten von Schmuck oder Uhrengehäusen oder zum Aufbringen von Schutzbeschichtungen oder einfach zur Verschönerung von Gebrauchsgegenständen.

Auch andere Verfahren, wie zum Beispiel das Gasnitrieren sind wohl etablierte Methoden, die unter anderem im Korrosionsschutz eine grosse Bedeutung haben.

Grundsätzlich problematisch ist dabei die Beschichtung von sehr grossflächigen Werkstücken, wie zum Beispiel von Blechen, die unter anderem gegen Korrosion geschützt werden müssen. Derartige Bleche oder andere Substrate sind zum Beispiel auf Rollen in wesentlicher Breite, bis zu einigen Metern und in einer Länge von bis zu einigen hundert Metern oder sogar mehr, vorgesehen.

Eine etablierte Technik zur Beschichtung solcher Bleche ist zum Beispiel die galvanische oder elektrolytische Abscheidung. So ist es zum Beispiel bekannt, grosse Stahlbleche mit einer Korrosionsschutzschicht aus Zn und Mg zu versehen. Bei einem typischen bekannten Prozess wir in einem ersten Schritt auf einem Blech, das z.B. aus Stahl, Aluminium, aus einem anderen Metall oder einer Metalllegierung sein kann, elektrolytisch bzw. galvanisch eine 1 µm bis 30 µm starke Schicht aus reinem Zink (Zn) aufgebracht. Die Oberfläche dieser ersten Schicht wird dann einem Reinigungsprozess z.B. mittels Ultraschall und / oder PVD-Sputtern unterzogen. Danach wird eine dünne, ca. 0.1 µm bis 0.5 µm starke Schicht aus reinem Magnesium (Mg) mittels eines PVD Verfahrens auf die erste Zink-Schicht aufgebracht. Abschliessend findet eine Wärmebehandlung des Werkstücks für beispielsweise 10min bis 3Std. bei z.B. 200°C bis 550° C, in ganz speziellen Fällen bis 650°C statt, wodurch Diffusionsprozesse initiiert werden, so dass sich auf der Oberfläche der ursprünglich reinen Mg-Schicht MgZn₂ Phasen ausbilden können, wodurch ein verbesserter Schutz gegen Korrosion erreicht wird.

Die so behandelten Werkstücke haben im Vergleich zu Werkstücken mit reinen Zink-Schichten deutlich verbesserte Korrosionseigenschaften und lassen sich auch besser bearbeiten, weil die Kombinationsschichten insgesamt eine reduzierte Dicke aufweisen. Jedoch ist der oben beschriebene vierstufige Beschichtungsprozess ausserordentlich zeitaufwendig und erfordert vor allem die Kombination völlig verschiedener Verfahren, so dass sowohl die Durchführung des Beschichtungsprozesses als solches, als auch der apparative Aufwand enorm ist, so dass die Kosten für die Herstellung dieser Korrosionsschutzschichten im Grunde genommen unvertretbar hoch sind.

Daher wird bereits seit langem nach wirtschaftlicheren Alternativen gesucht, wobei als viel versprechende Technik grundsätzliche das thermische Spritzen in seinen unterschiedlichen Varianten in Frage kommt, vor allem weil das thermische Spritzen seit langem in der Einzelteil- und industriellen Serienfertigung etabliert ist. Die gängigsten thermischen Spritzverfahren, die insbesondere auch in der Serienfertigung zur Beschichtung von Oberflächen von Substraten in grosser Stückzahl Anwendung finden, sind z.B. das Flammspritzen mit einem Spritzpulver oder einem Spritzdraht, das Lichtbogenspritzen, das Hochgeschwindigkeitsflammspritzen (HVOF), das Flammschockspritzen oder das Plasmaspritzen. Die zuvor genannte Liste von thermischen Spritzverfahren ist sicher nicht abschliessend. Vielmehr kennt der Fachmann eine grosse Zahl von Varianten der aufgezählten Verfahren, sowie weitere Verfahren, z.B. Sonderverfahren wie das Flammspritzschweissen. Auch das sogenannte oder "Kaltgasspritzen" muss in diesem Zusammenhang genannt werden. Obwohl es ganz streng genommen eigentlich nicht zu den thermischen Spritzverfahren zu rechnen ist, werden im Rahmen dieser Anmeldung unter dem Begriff "thermische Spritzverfahren" neben allen bekannten thermischen Spritzverfahren, auch die bekannten "Kaltgasspritzverfahren" ("Cold-Spraying") verstanden.

Dabei hat sich das thermische Spritzen weite Anwendungsbereiche erschlossen. Man kann durchaus feststellen, dass das thermische Spritzen als Oberflächenbeschichtungsverfahren, was seine Einsatzmöglichkeiten betrifft, die Beschichtungstechnik mit der wahrscheinlich grössten Anwendungsbreite ist. Eine Abgrenzung der Einsatzbereiche der zuvor aufgelisteten Spritzverfahren scheint dabei nicht unbedingt sinnvoll, weil die Einsatzbereiche ineinander übergreifen können.

Dabei war es lange ein Problem grosse Fläche in ausreichender Gleichmässigkeit, insbesondere mit dünnen Schichten mit Dicken im Mikrometerbereich mittels thermischer Spritzverfahren zu versehen. Einen Durchbruch hat hier das in der EP 0776 594 B1 von Sulzer Metco vorgeschlagene thermische Niederdruck-Verfahren ("LPPS-Verfahren") gebracht, das mit einem breiten Plasmastrom die Herstellung einheitlicher Beschichtungen auf grossen Flächen, z.B. auf Blechen gestattet. Das wird einerseits durch die geometrische Ausgestaltung der Spritzpistole erreicht, wobei es aber zudem wesentlich ist, dass zwischen dem Inneren und dem Äusseren der Spritzpistole ein wesentlicher Druckunterschied herrscht. Das Werkstück, oder zumindest der zu beschichtende Oberflächenbereich des Werkstücks befindet sich dabei in einer Beschichtungskammer, in der, in Bezug auf das Innere der Spritzpistole, ein Unterdruck hergestellt wird, z.B. eine Unterdruck von weniger als 100 mbar, während in der Spritzpistole z.B. ein Druck von ca. 1000 mbar, also ungefähr Umgebungsdruck herrscht. Durch die Einstellung eines solchen Druckgefälles zwischen dem Inneren der Spritzpistole und der Beschichtungskammer kann ein breiter Beschichtungsstrahl erzeugt werden, mit welchem die Oberfläche des Werkstücks in zuvor nicht erreichbarer Gleichmässigkeit beschichtet werden kann.

Dabei ist dieses grundlegende Prinzip inzwischen wesentlich weiterentwickelt worden. Die EP 1 479 788 A1 zeigt zum Beispiel ein hybridisches Verfahren, das auf dem grundlegenden Verfahren der EP 0776 594 B1 aufbaut.

Diese Verfahren sind dabei besonders geeignet verschiedene metallische oder nicht metallische Beschichtungen, insbesondere auch keramische, karbidische oder nitridische Schichtkomponenten in dünnen Schichten aufzubringen.

Moderne technische Anforderungen gehen inzwischen jedoch dahin auch die weiter oben an einem exemplarischen Prozess beschrieben mehrstufigen galvanischer bzw. elektrolytischer Verfahren durch thermische Spritzverfahren zu ersetzen, da die thermisch gespritzten Schichten prinzipiell in einem einzigen Verfahrensschritt und viel effizienter, also mit deutlich höheren Abscheideraten, das heisst in viel kürzerer Zeit aufgebracht werden können.

Dabei war man bisher der Auffassung, dass die klassischen thermischen Spritzverfahren, insbesondere das zuvor kurz skizzierte LPPS-Verfahren, sowie die Kaltgasspritzverfahren für die für die Beschichtung mit Zink und Zink-Verbindungen grundsätzlich nicht anwendbar sind. Der Grund für dieses Vorurteil liegt darin, dass Zink bereits bei relativ niedrigen Temperaturen einen enorm hohen Dampfdruck hat. So hat Zink zum Beispiel bei ca. 900°C bereits einen Dampfdruck von ca. 1000 mbar, während Aluminium ungefähr denselben Dampfdruck erst bei ca. 2000°C erreicht und Al₂O₃ sogar erst bei ungefähr 3000°C aufweist.

Somit ist man bisher davon ausgegangen, dass vor allem, aber nicht nur, das LPPS-Verfahren zum thermischen Spritzen von zinkhaltigen Schichten nicht in Frage kommt, weil angenommen wurde, dass das Zink bereits im Beschichtungsstrahl aufgrund seines hohen Dampfdrucks in so grossem Masse entweicht, dass mittels thermischen Spritzens keine brauchbaren zinkhaltigen Schichten herstellbar sind. Dabei wurde nicht nur der hohe Dampfdruck des Zinks als solches als grundsätzliches Problem angesehen, sondern auch der grosse Unterschied im Dampfdruck zu anderen Materialien, die gleichzeitig mit dem Zink gespritzt werden könnte. Wird nämlich gleichzeitig zusammen mit Zink ein anderes Material, das zum Beipiel gleichzeitig separat mit Zink gespritzt wird, mit einem wesentlich niedrigeren Dampfdruck gespritzt, so muss befürchtet werden, dass sich bereits im Beschichtungsstrahl das Verhältnis der Zusammensetzung von Zink zu weiteren Spritzmaterialien massiv verändert, so dass die gespritzten Schichten nicht mehr die gewünschte Zusammensetzung haben und damit nicht der notwendige Korrosionsschutz erreichbar ist.

Die US 2004/253382 A1 offenbart ein Verfahren zum thermischen Beschichten einer Oberflache mit Zn oder einer Zn-Sn Legierung.

Eine verschleissfeste Beschichtung, die Zn und MCrAl Partikel enthält, wird in der US-A-5 358 753 offenbart.

Entsprechend existieren im Stand der Technik weder geeignete zinkhaltige Spritzwerkstoffe, und konsequenterweise auch keine entsprechenden thermischen Spritzverfahren.

Die Aufgabe der Erfindung ist es daher, einen thermischen Spritzwerkstoff bereitzustellen, so dass mittels eines thermischen Spritzverfahrens thermisch gespritzte Oberflächen herstellbar sind, die einen, im Vergleich mit den herkömmlich, z.B. galvanisch aufgebrachten Schichten, mindestens gleich guten Korrosionsschutz bieten. Des weiteren ist es ein Aufgabe der Erfindung ein thermisches Spritzverfahren bereitzustellen, mit welchem eine entsprechende Oberflächenschicht herstellbar ist.

Die diese Aufgaben in verfahrenstechnischer und apparativer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit einen thermischen Spritzwerkstoff zum Beschichten einer Oberfläche eines Werkstücks mittels eines thermischen Spritzverfahrens, wobei der Spritzwerkstoff Zink enthält.

Wesentlich für den erfindungsgemässen Spritzwerkstoff ist somit, dass dieser Zink enthält. Die Gegenwart von Zink in einer mit dem Spritzwerkstoff gespritzten Beschichtung gewährleistet nämlich, eventuell unter Beimischung weiterer geeigneter Elemente, dass das mit der Zink-Beschichtung versehene Werkstück, zum Beispiel ein Blech aus Stahl, Aluminium oder einem anderen geeigneten Metall oder einer geeigneten Metalllegierung, optimal gegen Korrosion geschützt ist. Das der erfindungsgemässe Spritzwerkstoff überhaupt für ein thermisches Spritzverfahren verwendbar ist, beruht auf der Erkenntnis, dass durch geeignete Wahl der Beschichtungsparameter, was weiter unten noch detailliert beschrieben ist, auch das Spritzen von Werkstoffen mit hohem Dampfdruck, selbst in Kombination mit anderen Materialien, die einen deutlich niedrigeren Dampfdruck haben, möglich ist.

In einem bevorzugten Ausführungsbeispiel ist der Spritzwerkstoff eine Zinklegierung und / oder eine intermetallische Verbindung und / oder eine metallische Zusammensetzung und / oder eine nicht metallische Zusammensetzung der Form Zn-X ist, wobei X mindestens eine metallische oder eine nicht metallische Komponente ist, Zn im Bereich von 70% Gewichtsprozent bis 100% Gewichtsprozent, bevorzugt mit mehr als 80% Gewichtsprozent enthalten ist, und X mindestens ein Element aus der Gruppe bestehend aus den Elementen Sn, Mg, Ca, Al, Fe, Ni, Co, Cu, Mo, Ti, Cr, Zr, Y, La, Ce, Sc, Pr, Dy, Dg, C, O, N insbesondere eine MCrAlY-Legierung, wobei M=Ni, Co, CoNi oder Fe ist.

Eine besondere Rolle spielen dabei die Kombinationen der Elemente Cu, Ni, Co, Mo, die unter anderem, aber nicht nur, z.B. die Zähigkeit einer zu spritzenden Schicht mitbestimmen.

In einem für die Praxis besonders wichtigen Ausführungsbeispiel ist Zinn (Sn) mit einem Anteil von bis zu 10% Gewichtsprozent, insbesondere bis zu 5% Gewichtsprozent, im Speziellen zwischen 1% und 4% Gewichtsprozent als Legierungselement im Spritzpulver enthalten. Durch die Zugabe von Sn kann unter anderem eine verstärkte Bindung zwischen den Zink (Zn) Partikeln bei der Diffusion erreicht werden. Um die Sn-Partikel kann sich nämlich z.B. ein Eutektikum mit einem Schmelzpunkt von ca. 200°C bilden, was die Diffusion während einer Wärmebehandlung stark beschleunigen kann. Dieser Punkt wird später bei der Beschreibung des erfindungsgemässen Verfahrens nochmals im Zusammenhang erläutert. Um die beschriebene Wirkung zu erreichen ist es besonders vorteilhaft, wenn der Ausgangswerkstoff Zn bereits vor dem Spritzen, also bereits im Spritzpulver selbst mit Sn legiert ist.

Bei einem anderen Ausführungsbeispiel kann der Spritzwerkstoff eine Mg-Zn Legierung umfassen, insbesondere MgZn₂ und / oder eine ZnAlₐ Legierung, insbesondere mit 1% ≤ a= ≤ 10% Gewichtsprozent, im speziellen mit 4% ≤ a ≤ 6%. Dabei führt die Zulegierung von Al einerseits dazu, dass der Schmelzpunkt der Legierung herabgesetzt wird und gleichzeitig der Dampfdruck von reinem Zink reduziert wird.

Insbesondere, aber nicht nur, zur Erhöhung der Härte und / oder der Verschleissschutzeigenschaften einer zu spritzenden Beschichtung kann ein erfindungsgemässer Spritzwerkstoff eine oxydische Komponente und / oder eine keramische Komponente , insbesondere MgO und / oder Al₂O₃ und / oder ein Karbid, insbesondere SiC und / oder ein Nitrid, insbesondere AlN umfassen und / oder eine Verbindung des Typs MₓO_{y}N_{z} enthalten, wobei M ein Metall ist, insbesondere Zr, Al, Cr, Ti, Ta oder ein anderes Metall ist, das eine thermodynamisch stabile Verbindung von diesem Typ ausbildet. Durch die Beimischung der keramischen Hartstoffe wird dabei insbesondere auch die Kratzfestigkeit der Oberfläche erhöht.

Dabei sind die möglichen zusätzlichen Komponenten im Spritzwerkstoff selbstverständlich abhängig von der Anwendung, in der ein zu beschichtendes Werkstück eingesetzt werden soll. Bevorzugt ist der Spritzwerkstoff dann keine homogene Legierung mehr, sondern ein Verbundwerkstoff, beispielsweise ein fein agglomeriertes Pulver mit Teilchendurchmesser vom Nanobereich bis in den Mikrometerbereich.

Desweiteren betrifft die Erfindung eine thermisch gespritzte Beschichtung auf einer Oberfläche eines Werkstücks, wobei die Oberflächenschicht Zink enthält.

Dabei kann die Beschichtung reines Zink, eine Zinklegierung und / oder eine intermetallische Verbindung und / oder eine metallische Zusammensetzung und / oder eine nicht metallische Zusammensetzung der Form Zn-X umfassen, wobei X mindestens eine metallische oder eine nicht metallische Komponente ist, Zn im Bereich von 70% Gewichtsprozent bis 100% Gewichtsprozent, bevorzugt mit mehr als 80% Gewichtsprozent enthalten ist, und X mindestens ein Element aus der Gruppe bestehend aus den Elementen Sn, Mg, Ca, Al, Fe, Ni, Co, Cu, Mo, Ti, Cr, Zr, Y, La, Ce, Sc, Pr, Dy, Dg, C, O, N insbesondere eine MCrAlY-Legierung, wobei M=Ni, Co, CoNi oder Fe ist.

In einem für die Praxis besonders wichtigen Ausführungsbeispiel enthält die thermisch gespritzte Beschichtung Zinn (Sn) mit einem Anteil von bis zu 10% Gewichtsprozent, insbesondere bis zu 5% Gewichtsprozent, im Speziellen zwischen 1% und 4% Gewichtsprozent als Legierungselement in der Oberflächenschicht. Wie bereits erwähnt kann durch die Zugabe von Sn unter anderem eine verstärkte Bindung zwischen den Zink (Zn) Partikeln bei der Diffusion erreicht werden. Um die Sn-Partikel kann sich nämlich z.B. ein Eutektikum mit einem Schmelzpunkt von ca. 200°C bilden, was die Diffusion während einer nach dem Aufbringen der Beschichtung eventuell noch durchzuführenden Wärmebehandlung stak beschleunigen kann. Um die beschriebene Wirkung zu erreichen ist es besonders vorteilhaft, wenn der Ausgangswerkstoff Zn bereits vor dem Spritzen, also bereits im Spritzpulver selbst mit Sn legiert ist.

In einem anderen Ausführungsbeispiel einer erfindungsgemässen thermisch gespritzten Beschichtung, umfass die Beschichtung eine Mg-Zn Legierung, insbesondere MgZn₂ und / oder eine ZnAlₐ Legierung, insbesondere mit 1% ≤ a= ≤ 10% Gewichtsprozent, im speziellen mit 4% ≤ a ≤ 6%, und / oder die Beschichtung enthält eine oxydische Komponente und / oder eine keramische Komponente , insbesondere MgO und / oder Al₂O₃ und / oder ein Karbid, insbesondere SiC und / oder ein Nitrid, insbesondere AlN. Dabei führt, wie bereits erwähnt, die Zulegierung von Al einerseits dazu, dass der Schmelzpunkt der Legierung herabgesetzt wird und gleichzeitig der Dampfdruck von reinem Zink reduziert wird.

Die Beschichtungen mit oxydischen und / oder karbidischen und / oder keramischen Komponenten zeichnen sich insbesondere durch eine hohe Härte und / oder eine gute Verschleissfestigkeit aus. Bei diesen harten Schichten, enthaltend z.B. SiC oder AIN oder andere Komponenten dieser Materialklassen kann auch die Bemengung bzw. Dotierung mit relativ kleinen Mengen einen deutlichen Einfluss auf die entsprechenden Eigenschaften haben. Insbesondere wird dadurch die Kohäsion zwischen den Partikeln verbessert und / oder der säulenartige Aufbau der Kristallstruktur in der Beschichtung unterstützt.

In einem anderen Beispiel enthält der Spritzwerkstoff eine Verbindung des Typs MₓO_{y}N_{z}, wobei M ein Metall ist, insbesondere Zr, Al, Cr, Ti, Ta oder ein anderes Metall ist, das eine thermodynamisch stabile Verbindung von diesem Typ ausbildet.

Bevorzugt liegt die Dicke der Beschichtung zwischen 1 µm und 100 µm, insbesondere zwischen 2 µm und 50 µm, im Speziellen zwischen 2 µm und 20 µm, was besonders, aber nicht nur, für grossfläche Bleche, wie sie zum Beispiel im Automobilbereich verbaut werden, besonders vorteilhaft ist.

Die Erfindung betrifft weiter ein thermisches Spritzverfahren zur Bildung einer oben beschriebenen Beschichtung auf einer Oberfläche eines Werkstücks, wobei ein Zink enthaltender Spritzwerkstoff gemäss der vorliegenden Erfindung verwendet wird.

Dabei wird ein zu beschichtendes Werkstück in eine Prozesskammer bzw. in eine Beschichtungskammer eingebracht, und in der Prozesskammer eine Gasatmosphäre mit einem vorgegebenen Gasdruck eingestellt und das Werkstück unter dem vorgegebenen Gasdruck mit einem Beschichtungsstrahl beschichtet.

In der Prozesskammer wird dabei bevorzugt ein Gasdruck von weniger als 100 mbar, bevorzugt ein Gasdruck zwischen 1 mbar und 10 mbar, im Speziellen zwischen 1 mbar und 2 mbar eingestellt und / oder ein mittlerer Spritzabstand zwischen 800 mm und 3000 mm, insbesondere zwischen 1000 mm und 2000 mm, im Speziellen zwischen 1000 mm und 1400 mm eingestellt.

In einem für die Praxis besonders wichtigen Ausführungsbeispiel eines erfindungsgemässen Verfahrens wird zwischen einem Druck im Inneren des Beschichtungsstrahls und dem Gasdruck der Gasatmosphäre ein Druckverhältnis von 1 bis 40, insbesondere zwischen 5 und 30, im Speziellen ein Druckverhältnis von ca. 10 bis 20 eingestellt. D.h., es wird bevorzugt ein Gasdruck der Gasatmosphäre gewählt, der kleiner als der Druck im Inneren des Beschichtungsstrahls, zum Beispiel in einem Plasmastrahls am Ausgang der Spritzpistole. Diese Wahl der Druckparameter wird auch als "under-expanded condition" bezeichnet. Die Wahl dieser Parameter ist besonders dann sehr vorteilhaft, wenn der Spritzwerkstoff ein Material enthält das leicht verdampft, also zum Beispiel einen hohen Dampfdruck hat.

Es hat sich nämlich gezeigt, dass sich zum Beispiel in einem mit Überschallgeschwindigkeit ausbreitenden Beschichtungsstrahl, z.B. in einem Plasmastrahl, schockartige Wellen oder Zustände ausbilden, die eine Barriere für das sich im Beschichtungsstrahl befindliche Material darstellen, so dass dieses im wesentlichen nicht aus dem Beschichtungsstrahl austreten kann. Das heisst, der Strahl wirkt ähnlich wie ein Lichtleiter für Licht, als total reflektierende Begrenzung, so dass das verdampfte bzw. vaporisierte Material im Beschichtungsstrahl gefangen bleibt und daher auch Materialien mit hohem Dampfdruck gespritzt werden können. Dieser Effekt wird dadurch begünstigt, dass im Randbereich eines thermischen Beschichtungsstrahls eine quasi laminare Strömung vorliegt, d.h., dass in dessen Randbereich die Turbulenzen stark reduziert sind.

Dabei wird über die Länge des Beschichtungsstrahls gesehen besonders vorteilhaft ein Druckgradient von 0.001 mbar/mm bis 0.02 mbar/mm, insbesondere von 0.005 mbar/mm bis 0.01 mbar/mm eingestellt.

Es versteht sich, dass im Beschichtungsstrahl sowohl feste, flüssige und gasförmige, also vaporisierte Anteile enthalten sein können. Insbesondere eine Kombination von Flüssigen Anteilen und gasförmigen Anteilen führt zu besonders vorteilhaften Beschichtungen. Zur Abscheidung von verdampften bzw. vaporisierten Materialien ist es besonders wichtig, dass eine saubere Oberfläche des Werkstücks zur Verfügung steht. Heisse, im wesentliche flüssige Zink Tröpfchen auf der Oberfläche eines oxydhaltigen Substrats mit können dem Oxyd reagieren und haften dann sehr gut, so dass zumindest für die Bildung der Teile der Beschichtung, die unmittelbar mit der Oberfläche des Substrats in Kontakt stehen, im wesentlichen flüssige Tröpfen, insbesondere aus Zink, sehr vorteilhaft für die Haftung der aufzubauenden Beschichtung sind.

Die Temperatur des Werkstücks wird während des Beschichtens vorteilhaft auf einen vorgegebenen Wert, insbesondere auf einer Temperatur zwischen Raumtemperatur und 550° C, im Speziellen auf eine Temperatur zwischen Raumtemperatur und 400°C eingestellt.

Nach dem Beschichten kann, falls erforderlich, das beschichtete Werkstück bei einer vorgegebenen Temperatur, insbesondere bei einer Temperatur zwischen 400° C und 650° C, im Speziellen bei ca. 550° C noch wärmebehandelt werden. Die Wärmebehandlung kann dabei unter anderem zu einer Homogenisierung und / oder Verdichtung der aufgespritzten Beschichtungen führen, die Verbindung der Beschichtung mit dem Substrat verbessern, die Oberflächenrauheit herabsetzen und / oder zur Bildung bevorzugter Oxide oder metallischer und / oder nicht metallischer Verbindungen führen, die unter anderem die Korrosionsfestigkeit, die Verschleissfestigkeit oder andere physikalische oder chemische Eigenschaften der Beschichtung positiv beeinflussen können.

In speziellen Fällen ist es auch möglich, dass zusätzlich schützende Deckschichten, insbesondere auch organische Deckschichten aufgebracht werden, insbesondere mit LPPS-Hybrid-Prozessen, wie sie zum Beispiel in der EP 1 479 788 A1 beschrieben sind, so dass zum Beispiel Beschichtungen mit optimalem Korrosionsschutz auf einem Werkstück erzeugt werden.

Dadurch, dass alle Prozessschritte bevorzugt in derselben Prozesskammer gleichzeitig oder nacheinander durchgeführt werden, treten keine oxidischen Verunreinigungen auf, was eine einfachere Prozessführung ermöglicht und zu einer besseren Diffusion, sowohl in und zwischen den Teilchen, als auch zwischen angrenzenden Schichten führt. Sehr hohe Oberflächenbereiche, die man erhält wenn dünne Schichten durch mehr oder weniger flüssige Tröpfchen aufgebaut werden, führen zu niedrigeren Sintertemperaturen bei der Wärmebehandlung und damit zu dichteren Beschichtungen.

Je nach Anforderungen kann es dabei vorteilhaft sein, vor und / oder während des Beschichtungsprozesses eine Reinigung der Oberfläche von organischen und / oder oxidischen Verunreinigungen vorzunehmen, bevorzugt mittels Lichtbogen Reinigung oder abdampfen.

Es versteht sich, dass natürlich auch Mehrschichtsysteme, die aus Einzelschichten von gleicher oder verschiedener chemischer und / oder struktureller Zusammensetzung aufgebaut sind ebenfalls mit einem erfindungsgemässen Verfahren auf ein Werkstück aufgebracht werden können. Selbstverständlich können auch Gradientenschichten erzeugt werden, indem zum Beispiel während eines Beschichtungsvorganges kontrolliert Verfahrensparameter geändert werden und / oder die Zusammensetzung des Spritzwerkstoffs geändert wird.

Grundsätzlich können alle an sich bekannten thermischen Spritzverfahren vorteilhaft zur Durchführung eines erfindungsgemässen Verfahrens verwendet werden, d.h. das Spritzverfahren ist ein Plasmaspritzverfahren, insbesondere ein LPPS-Verfahren, im Speziellen ein LPPS-Dünnfilm Verfahren, ein HVOF Verfahren, ein Kaltgasspritzverfahren, ein Flammspritzverfahren, im Speziellen ein Drahtspritz- oder ein Pulverspritzverfahren oder ein anderes thermisches Spritzverfahren ist, wenn nur die Parameter und Spritzbedingungen gemäss der vorliegenden Erfindung gewählt werden.

Wie bereits mehrfach erwähnt, betrifft die Erfindung weiterhin die Verwendung eines erfindungsgemässen Werkstoffs zum Beschichten einer Oberfläche eines Werkstücks mittels eines thermischen Spritzverfahrens.

Drüber hinaus betrifft die Erfindung auch ein Werkstück, insbesondere ein grossflächiges Blech aus Metall, im Speziellen ein Blech aus Aluminium und / der Eisen und / oder Stahl und / oder einem Metall und / oder einer Metalllegierung und / oder einem anderen Werkstoff, auf das mit einem erfindungsgemässen Werkstoff eine Beschichtung gemäss der vorliegenden Erfindung aufgebracht ist. Es versteht sich, dass selbstverständlich ein erfindungsgemässes Werkstück auch beidseitig beschichtet werden kann.

Im Folgenden wird ein wesentlicher Effekt eines speziellen Ausführungsbeispiels eines erfindungsgemässen Verfahrens an Hand der Zeichnung näher erläutert. Es zeigen:
- Fig. 1: ein under-expanded / over-expanded Druck Diagramm;
- Fig. 2: Wirkung der under-expanded Bedingung auf den Teilchenstrom im Beschichtungsstrahl.

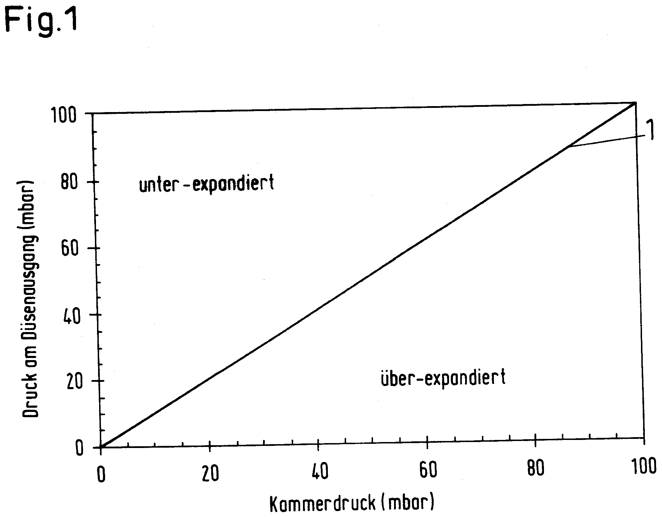

In Fig. 1 ist ein Diagramm dargestellt, bei welchem auf der Ordinatenachse Druckwerte aufgetragen sind, wie sie zum Beispiel beim Plasmaspritzen am Ausgang 4 einer Düse 3 einer Spritzpistole 2 vorkommen können, und an der Abszisse Gasdrücke, wie sie zum Beispiel beim Beschichten eines Substrats in einer Prozesskammer eingestellt werden können. Die Trennlinie 1 trennt dabei das Diagramm in zwei Teilgebiete, die mit "under-expanded" und "over-expanded" gekennzeichnet sind. Im Bereich under-expanded ist der Druck am Ausgang 4 der Düse 3 der Spritzpistole 2 höher als der Gasdruck in der Prozesskammer. Im Teilgebiet over-expanded ist dagegen der Gasdruck in der Prozesskammer höher als der Druck am Ausgang 4 der Düse 3.

Bei der Durchführung eines erfindungsgemässen Verfahrens werden die Druckparameter bevorzugt so gewählt, dass im Bereich under-expanded beschichtet wird.

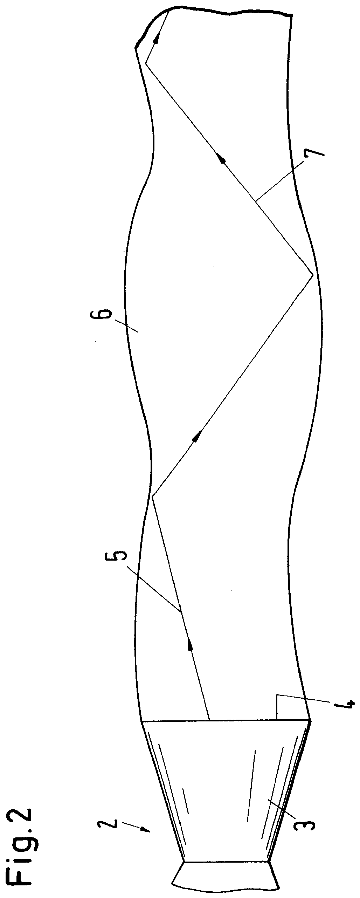

Fig. 2 zeigt in schematischer Weise, wie sich die Wahl der Druckparameter im Teilbereich under-expanded auf die Bewegung eines Spritzwerkstoffs 5 in einem Beschichtungsstrahl 6 auswirkt.

In Fig. 2 ist schematisch ein Ausschnitt einer Plasmaspritzpistole 2 dargestellt, aus der aus einer Düse 3 ein Beschichtungsstrahl 6 austritt. Der Beschichtungsstrahl 6 hat Überschallgeschwindigkeit, so dass sich Stosswellen im Beschichtungsstrahl 6 ausbilden. Die Ausbildung der Stosswellen ist durch die wellenförmige Begrenzung des Beschichtungsstrahls 6 symbolisch dargestellt. Darstellungsgemäss rechts in Fig. 2 befindet sich ein nicht dargestelltes Substrat, das durch den Beschichtungsstrahl 6 beschichtet wird.

Im Beispiel der Fig. 2 wurde ein Gasdruck der Gasatmosphäre in der Prozesskammer gewählt, der kleiner als der Druck am Ausgang 4 der Spritzpistole 2 ist. Diese Wahl der Druckparameter entspricht dem Teilbereich "under-expanded" im Diagramm der Fig. 1. Die Wahl dieser Parameter ist, wie bereits erwähnt, besonders dann sehr vorteilhaft, wenn der Spritzwerkstoff 5 ein Material enthält das leicht verdampft, also zum Beispiel einen hohen Dampfdruck hat.

Der Beschichtungsstrahl 6 der Fig. 2 breitet sich mit Überschallgeschwindigkeit aus, so dass sich die schockartige Wellen oder Zustände ausbilden, die eine Barriere für das sich im Beschichtungsstrahl 6 befindliche Material 5 darstellen, so dass dieses im wesentlichen nicht aus dem Beschichtungsstrahl 6 austreten kann. Das heisst, der Beschichtungsstrahl 6 wirkt ähnlich wie ein Lichtleiter für Licht, als mehr oder weniger total reflektierende Begrenzung, so dass das verdampfte bzw. vaporisierte Material im Beschichtungsstrahl gefangen und zum Beispiel dem Pfad 7 in Richtung zu dem zu beschichtenden Substrat folgt. Daher ist es möglich, mit einem Verfahren gemäss der vorliegenden Erfindung auch Materialien mit hohem Dampfdruck, wie zum Beispiel mit Zn zu beschichten.

Es versteht sich dabei von selbst, dass die Erfindung nicht auf die beschriebenen Ausführungsbeispiele beschränkt ist und insbesondere die im Rahmen dieser Anmeldung beschriebenen erfindungsgemässen Ausführungsbeispiele selbstverständlich auch in jeder geeigneten Art kombiniert werden können.

## Patentansprüche

1. Thermischer Spritzwerkstoff zum Beschichten einer Oberfläche eines Werkstücks mittels eines thermischen Spritzverfahrens, wobei der Werkstoff Zink enthält, und Sn mit einem Anteil von bis zu 10% Gewichtsprozent, insbesondere bis zu 5% Gewichtsprozent, im Speziellen zwischen 1% und 4% Gewichtsprozent als Legierungselement im Spritzpulver enthalten ist, **dadurch gekennzeichnet, dass** der Spritzwerkstoff eine Zinklegierung und / oder eine intermetallische Verbindung und / oder eine metallische Zusammensetzung und / oder eine nicht metallische Zusammensetzung der Form Zn-X ist, wobei X mindestens eine metallische oder eine nicht metallische Komponente ist, Zn im Bereich von 70% Gewichtsprozent bis 100% Gewichtsprozent, bevorzugt mit mehr als 80% Gewichtsprozent enthalten ist, und wobei X mindestens ein Element aus der Gruppe bestehend aus den Elementen Sn, Mg, Ca, Al, Fe, Ni, Co, Cu, Mo, Ti, Cr, Zr, Y, La, Ce, Sc, Pr, Dy, Dg, C, O, N insbesondere eine MCrAlY-Legierung, wobei M=Ni, Co, CoNi oder Fe ist.

2. Thermischer Spritzwerkstoff nach einem der vorangehenden Ansprüche, wobei der Spritzwerkstoff eine Mg-Zn Legierung umfasst, insbesondere MgZn₂ und / oder eine ZnAlₐ Legierung, insbesondere mit 1% ≤ a ≤ 10% Gewichtsprozent, im speziellen mit 4% ≤ a ≤ 6%.

3. Thermischer Spritzwerkstoff nach einem der vorangehenden Ansprüche, wobei der Spritzwerkstoff eine oxydische Komponente und / oder eine keramische Komponente, insbesondere MgO und / oder Al₂O₃ und / oder ein Karbid, insbesondere SiC und / oder ein Nitrid, insbesondere AIN umfasst, und / oder wobei der Spritzwerkstoff eine Verbindung des Typs MₓO_{y}N_{z} enthält, wobei M ein Metall ist, insbesondere Zr, Al, Cr, Ti, Ta oder ein anderes Metall ist, das eine thermodynamisch stabile Verbindung von diesem Typ ausbildet.

4. Thermisch gespritzte Beschichtung auf einer Oberfläche eines Werkstücks, wobei die Oberflächenschicht Zink enthält, und Sn mit einem Anteil von bis zu 10% Gewichtsprozent, insbesondere bis zu 5% Gewichtsprozent, im Speziellen zwischen 1% und 4% Gewichtsprozent als Legierungselement in der Oberflächenschicht enthalten ist, **dadurch gekennzeichnet, dass** die Beschichtung eine Zinklegierung und / oder eine intermetallische Verbindung und / oder eine metallische Zusammensetzung und / oder eine nicht metallische Zusammensetzung der Form Zn-X umfasst, wobei X mindestens eine metallische oder eine nicht metallische Komponente ist, Zn im Bereich von 70% Gewichtsprozent bis 100% Gewichtsprozent, bevorzugt mit mehr als 80% Gewichtsprozent enthalten ist, und wobei X mindestens ein Element aus der Gruppe bestehend aus den Elementen Sn, Mg, Ca, Al, Fe, Ni, Co, Cu, Mo, Ti, Cr, Zr, Y, La, Ce, Sc, Pr, Dy, Dg, C, O, N insbesondere eine MCrAlY-Legierung, wobei M=Ni, Co, CoNi oder Fe ist.

5. Thermisch gespritzte Beschichtung nach Anspruch 4, wobei die Beschichtung eine Mg-Zn Legierung umfasst, insbesondere MgZn₂ und / oder eine ZnAlₐ Legierung, insbesondere mit 1% ≤ a ≤ 10% Gewichtsprozent, im speziellen mit 4% ≤ a ≤ 6%.

6. Thermisch gespritzte Beschichtung nach einem der Ansprüche 4 bis 5, wobei die Beschichtung eine oxydische Komponente und / oder eine keramische Komponente, insbesondere MgO und / oder Al₂O₃ und / oder ein Karbid, insbesondere SiC und / oder ein Nitrid, insbesondere AIN umfasst, und / oder wobei der Spritzwerkstoff (5) eine Verbindung des Typs MₓO_{y}N_{z} enthält, wobei M ein Metall ist, insbesondere Zr, Al, Cr, Ti, Ta oder ein anderes Metall ist, das eine thermodynamisch stabile Verbindung von diesem Typ ausbildet.

7. Thermisch gespritzte Beschichtung nach einem der Ansprüche 4 bis 6, wobei die Dicke der Beschichtung zwischen 1 µm und 100 µm, insbesondere zwischen 2 µm und 50 µm, im Speziellen zwischen 2 µm und 20 µm liegt.

8. Thermisches Spritzverfahren zur Bildung einer Beschichtung nach einem der Ansprüche 4 bis 7 auf einer Oberfläche eines Werkstücks, **dadurch gekennzeichnet, dass** ein Zink enthaltender Spritzwerkstoff (5) nach einem der Ansprüche 1 bis 3 verwendet wird.

9. Thermisches Spritzverfahren nach Anspruch 8, wobei ein zu beschichtendes Werkstück in eine Prozesskammer eingebracht wird, und in der Prozesskammer eine Gasatmosphäre mit einem vorgegebenen Gasdruck eingestellt wird und das Werkstück unter dem vorgegebenen Gasdruck mit einem Beschichtungsstrahl (6) beschichtet wird.

10. Thermisches Spritzverfahren nach einem der Ansprüche 8 oder 9, wobei in der Prozesskammer ein Gasdruck von weniger als 100 mbar, bevorzugt ein Gasdruck zwischen 1 mbar und 10 mbar, im Speziellen zwischen 1 mbar und 2 mbar eingestellt wird.

11. Thermisches Spritzverfahren nach einem der Ansprüche 8 bis 10, wobei ein mittlerer Spritzabstand zwischen 400 mm und 3000 mm, insbesondere zwischen 800 mm und 2000 mm, im Speziellen zwischen 1000 mm und 1400 mm liegt.

12. Thermisches Spritzverfahren nach einem der Ansprüche 8 bis 11, wobei zwischen einem Druck im Inneren des Beschichtungsstrahls (6) und dem Gasdruck der Gasatmosphäre ein Druckverhältnis von 1 bis 40, insbesondere zwischen 5 und 30, im Speziellen ein Druckverhältnis von ca. 10 bis 20 eingestellt wird, und / oder über die Länge des Beschichtungsstrahls (6) ein Druckgradient von 0.001 mbar/mm bis 0.02 mbar/ mm, insbesondere von 0.005 mbar/mm bis 0.01 mbar/mm eingestellt wird.

13. Thermisches Spritzverfahren nach einem der Ansprüche 8 bis 12, wobei die Temperatur des Werkstücks während des Beschichtens auf einen vorgegebenen Wert, insbesondere auf eine Temperatur zwischen Raumtemperatur und 550° C, im Speziellen auf eine Temperatur zwischen Raumtemperatur und 400°C eingestellt wird, und / oder wobei das Werkstück nach dem Beschichten bei einer vorgegebenen Temperatur, insbesondere bei einer Temperatur zwischen 400° C und 650° C, im Speziellen bei ca. 550° C Wärmebehandelt wird.

14. Thermisches Spritzverfahren nach einem der Ansprüche 8 bis 13, wobei das Spritzverfahren ein Plasmaspritzverfahren, insbesondere ein LPPS-Verfahren, im Speziellen LPPS-Dünnfilm Verfahren, ein HVOF Verfahren, ein Kaltgasspritzverfahren, ein Flammspritzverfahren, im Speziellen ein Drahtspritz- oder ein Pulverspritzverfahren oder ein anderes thermisches Spritzverfahren ist.

15. Verwendung eines Werkstoffs nach einem der Ansprüche 1 bis 3 zum Beschichten einer Oberfläche eines Werkstücks mittels eines thermischen Spritzverfahrens.

16. Werkstück, insbesondere grossflächiges Blech aus Metall, im Speziellen ein Blech aus Aluminium und / der Eisen und / oder Stahl und / oder einem Metall und / oder einer Metalllegierung und / oder einem anderen Werkstoff (5) beschichtet mit einem Werkstoff nach einem der Ansprüche 1 bis 3 und einer Beschichtung nach einem der Ansprüche 4 bis 7.

## Claims

1. A thermal spraying material for the coating of a surface of a workpiece by means of a thermal spraying method, wherein the spraying material contains zinc, and Sn is contained in the spray powder as an alloy element with a proportion of up to 10% by weight, in particular up to 5% by weight, especially between 1% and 4% by weight, **characterised in that** the spraying material is a zinc alloy and/or an intermetallic compound and/or a metallic compound and/or a non metallic compound of the kind Zn-X, wherein X is at least a metallic or a non-metallic component, Zn is contained in the range of 70% by weight to 100% by weight, preferably with more than 80% by weight, and wherein X is at least one element from the group consisting of the elements Sn, Mg, Ca, Al, Fe, Ni, Co, Cu, Mo, Ti, Cr, Zr, Y, La, Ce, Sc, Pr, Dy, Dg, C, O, N in particular a MCrAlY alloy, wherein M=Ni, Co, CoNi or Fe.

2. A thermal spraying material in accordance with any one of the previous claims, wherein the spraying material includes a Mg-Zn alloy, in particular MgZn₂ and/or a ZnAlₐ alloy, in particular with 1 % ≤a=≤ 10% by weight, especially with 4% ≤ a ≤ 6%.

3. A thermal spraying material in accordance with any one of the previous claims, wherein the spraying material includes an oxidic component and/or a ceramic component, in particular MgO and/or Al₂O₃ and or a carbide, in particular SiC and/or a nitride, in particular AlN and/or wherein the spraying material contains a compound of the type MₓO_{y}N_{z}, wherein M is a metal, in particular Zr, Al, Cr, Ti, Ta or another metal which forms a thermodynamically stable compound of this type.

4. A thermally sprayed coating on a surface of a workpiece, wherein the surface layer contains zinc, and Sn is contained as an alloying element in the surface layer with a proportion of up to 10% by weight, in particular up to 5% by weight, especially between 1% and 4% by weight, **characterised in that** the coating includes a zinc alloy and/or an intermetallic compound and/or a metallic composition and/or a non-metallic composition of the kind Zn-X, wherein X is at least a metallic or a non-metallic component, Zn is contained in the range from 70% by weight to 100% by weight, preferably with more than 80% by weight and wherein X is at least one element from the group consisting of the elements Sn, Mg, Ca, Al, Fe, Ni, Co, Cu, Mo, Ti, Cr, Zr, Y, La, Ce, Sc, Pr, Dy, Dg, C, O, N in particular a MCrAlY alloy, wherein M=Ni, Co, CoNi or Fe.

5. A thermally sprayed coating in accordance with claim 4, wherein the coating includes a Mg-Zn alloy, in particular MgZn₂ and/or a ZnAlₐ alloy, in particular with 1 % ≤a=≤ 10% by weight, especially with 4% ≤ a ≤ 6%.

6. A thermally sprayed coating in accordance with any one of the claims 4 to 5, wherein the coating contains an oxidic component and/or a ceramic component, in particular MgO and/or Al₂O₃ and or a carbide, in particular SiC and/or a nitride, in particular AlN and/or wherein the spraying material (5) contains a compound of the type MₓO_{y}N_{z}, wherein M is a metal, in particular Zr, Al, Cr, Ti, Ta or another material which forms a thermodynamically stable compound of this type.

7. A thermally sprayed coating in accordance with any of the claims 4 to 6, wherein the thickness of the coating lies between 1µm and 100µm, in particular between 2µm and 50µm, especially between 2µm and 20µm.

8. A thermal spraying method for the formation of a coating in accordance with any one of the claims 4 to 7 on a surface of a workpiece, **characterised in that** a zinc-containing spraying material (5) is used in accordance with any one of the claims 1 to 3.

9. A thermal spraying method in accordance with claim 8, wherein a coated workpiece is brought into a process chamber and a gas atmosphere is adjusted with a pre-determined gas pressure is set in the process chamber and the workpiece is coated with a coating beam (6) at the pre-determined gas pressure.

10. A thermal spraying method in accordance with one of the claims 8 or 9, wherein a gas pressure of less than 100 mbar, preferably a gas pressure between 1 mbar and 10 mbar, especially between 1 mbar and 2 mbar is set in the process chamber.

11. A thermal spraying method in accordance with one of the claims 8 to 10, wherein a mean spraying distance lies between 400 mm and 3000 mm, in particular between 800 mm and 2000 mm, especially between 1000 mm and 1400 mm.

12. A thermal spraying method in accordance with any one of the claims 8 to 11, wherein a pressure ratio is set between a pressure in the interior of the coating beam (6) and the gas pressure of the gas atmosphere of 1 to 40, in particular of between 5 to 30, especially a pressure ratio of approximately 10 to 20 and/or a pressure gradient is set over the length of the coating jet (6) of 0.001 mbar/mm to 0.02 mbar/mm, in particular of 0.005 mbar/mm to 0.01 mbar/mm.

13. A thermal spraying method in accordance with any one of the claims 8 to 12, wherein the temperature of the workpiece is set at a pre-determined value during the coating, in particular at a temperature between room temperature and 550° C, especially at a temperature between room temperature and 400° C, and/or wherein the workpiece is heat treated after the coating at a predetermined temperature, in particular at a temperature between 400° C and 650°C, especially at approximately 550° C.

14. A thermal spraying method in accordance with any one of the claims 8 to 13, wherein the spraying method is a plasma spraying method, in particular an LPPS method, especially an LPPS thin film method, an HVOF method, a cold gas spraying method, a flame spraying method, especially a wire flame spraying method or powder spraying method or another thermal spraying method.

15. The use of a material in accordance with any one of the claims 1 to 3 for the coating of a surface of a workpiece by means of a thermal spraying method.

16. A workpiece, in particular a large area sheet of metal, especially a sheet made of aluminium and / of iron and/or of steel and/or of a metal and/or of a metal alloy and/or of another material (5) coated with a material in accordance with one of the claims 1 to 3 and with a coating in accordance with any one of the claims 4 to 7.

## Revendications

1. Matériau de revêtement par pulvérisation thermique, pour revêtir une surface d'une pièce en oeuvre par un procédé de pulvérisation thermique, le matériau contenant du zinc, et du Sn étant présent en tant qu'élément d'alliage dans la poudre de revêtement par pulvérisation selon une proportion allant jusqu'à 10 % en poids, en particulier jusqu'à 5 % en poids, spécialement de 1 à 4 % en poids, **caractérisé en ce que** le matériau de revêtement par pulvérisation est un alliage de zinc et/ou un composé intermétallique et/ou une composition métallique et/ou une composition non métallique de la forme Zn-X, dans laquelle X est au moins un composant métallique ou un composant non métallique, du Zn étant présent en une quantité comprise dans la plage de 70 % en poids à 100 % en poids, de préférence supérieure à 80 % en poids, et X étant au moins un élément du groupe consistant en les éléments Sn, Mg, Ca, Al, Fe, Ni, Co, Cu, Mo, Ti, Cr, Zr, Y, La, Ce, Sc, Pr, Dy, Dg, C, O, N, en particulier un alliage MCrAlY dans lequel M = Ni, Co, CoNi ou Fe.

2. Matériau de revêtement par pulvérisation thermique selon l'une des revendications précédentes, le matériau de revêtement par pulvérisation comprenant un alliage Mg-Zn, en particulier un alliage MgZn₂ et/ou un alliage ZnAlₐ, en particulier avec 1 % ≤ a ≤ 10 % en poids, spécialement 4 % ≤ a ≤ 6 %.

3. Matériau de revêtement par pulvérisation thermique selon l'une des revendications précédentes, le matériau de revêtement par pulvérisation comprenant un composant de type oxyde et/ou un composant céramique, en particulier MgO et/ou Al₂O₃ et/ou un carbure, en particulier SiC, et/ou un nitrure, en particulier AlN, et/ou le matériau de revêtement par pulvérisation contenant un composé du type MₓO_{y}N_{z}, où M est un métal, en particulier Zr, Al, Cr, Ti, Ta ou un autre métal qui forme un composé thermodynamiquement stable de ce type.

4. Revêtement obtenu par pulvérisation thermique sur une surface d'une pièce en oeuvre, la couche superficielle contenant du zinc, et du Sn étant présent en tant qu'élément d'alliage dans la couche superficielle selon une proportion allant jusqu'à 10 % en poids, en particulier jusqu'à 5 % en poids, spécialement comprise entre 1 et 4 % en poids, **caractérisé en ce que** le revêtement est un alliage de zinc et/ou un composé intermétallique et/ou une composition métallique et/ou une composition non métallique de la forme Zn-X, dans laquelle X est au moins un composant métallique ou un composant non métallique, du Zn étant présent en une quantité comprise dans la plage de 70 % en poids à 100 % en poids, de préférence supérieure à 80 % en poids, et X étant au moins un élément du groupe consistant en les éléments Sn, Mg, Ca, Al, Fe, Ni, Co, Cu, Mo, Ti, Cr, Zr, Y, La, Ce, Sc, Pr, Dy, Dg, C, O, N, en particulier un alliage MCrAlY dans lequel M = Ni, Co, CoNi ou Fe.

5. Revêtement obtenu par pulvérisation thermique selon la revendication 4, le revêtement comprenant un alliage Mg-Zn, en particulier un alliage MgZn₂ et/ou un alliage ZnAlₐ, en particulier avec 1 % ≤ a ≤ 10 % en poids, spécialement 4 % ≤ a ≤ 6 %.

6. Revêtement obtenu par pulvérisation thermique selon l'une des revendications 4 à 5, le revêtement comprenant un composant à base d'oxyde et/ou un composant céramique, en particulier MgO et/ou Al₂O₃ et/ou un carbure, en particulier SiC et/ou un nitrure, en particulier AlN, et/ou le matériau de revêtement par pulvérisation (5) contenant un composé du type MₓO_{y}N_{z}, dans lequel M est un métal, en particulier Zr, Al, Cr, Ti, Ta ou un autre métal qui forme un composé thermodynamiquement stable de ce type.

7. Revêtement obtenu par pulvérisation thermique selon l'une des revendications 4 à 6, l'épaisseur du revêtement étant comprise entre 1 µm et 100 µm, en particulier entre 2 µm et 50 µm, spécialement entre 2 µm et 20 µm.

8. Procédé de pulvérisation thermique pour la formation d'un revêtement selon l'une des revendications 4 à 7 sur une surface d'une pièce en oeuvre, **caractérisé en ce qu'**on utilise un matériau de revêtement par pulvérisation (5), contenant du zinc, selon l'une des revendications 1 à 3.

9. Procédé de pulvérisation thermique selon la revendication 8, dans lequel on introduit une pièce en oeuvre à revêtir dans une cabine de pulvérisation, et on ajuste dans la cabine de pulvérisation une atmosphère gazeuse présentant une pression de gaz prédéterminée, et on applique un revêtement sur la pièce en oeuvre, sous la pression de gaz prédéterminée, à l'aide d'un jet de revêtement (6).

10. Procédé de pulvérisation thermique selon l'une des revendications 8 ou 9, dans lequel on ajuste dans la cabine de pulvérisation une pression de gaz inférieure à 100 mbar, de préférence une pression de gaz comprise entre 1 mbar et 10 mbar, spécialement entre 1 mbar et 2 mbar.

11. Procédé de pulvérisation thermique selon l'une des revendications 8 à 10, dans lequel une distance moyenne de pulvérisation est comprise entre 400 mm et 3000 mm, en particulier entre 800 mm et 2000 mm, spécialement entre 1000 mm et 1400 mm.

12. Procédé de pulvérisation thermique selon l'une des revendications 8 à 11, dans lequel on ajuste entre une pression dans le volume intérieur du jet de revêtement (6) et la pression du gaz de l'atmosphère gazeuse un rapport entre pressions de 1 à 40, en particulier compris entre 5 et 30, spécialement un rapport entre pressions d'environ 10 à 20, et/ou que l'on ajuste sur toute la longueur du jet de revêtement (6) un gradient de pression de 0,001 mbar/mm à 0,02 mbar/mm, en particulier de 0,005 mbar/mm à 0,01 mbar/mm.

13. Procédé de pulvérisation thermique selon l'une des revendications 8 à 12, dans lequel la température de la pièce en oeuvre est, pendant le revêtement, ajustée à une valeur prédéterminée, en particulier à une température comprise entre la température ambiante et 550°C, spécialement à une température comprise entre la température ambiante et 400°C, et/ou dans lequel la pièce en oeuvre est, après le revêtement, soumise à un traitement thermique à une température prédéterminée, en particulier à une température comprise entre 400°C et 650°C, spécialement d'environ 550°C.

14. Procédé de pulvérisation thermique selon l'une des revendications 8 à 13, le procédé de pulvérisation étant un procédé de pulvérisation par plasma, en particulier un procédé LPPS, spécialement un procédé LPPS couche mince, un procédé HVOF, un procédé de pulvérisation par gaz froid, un procédé de pulvérisation à la flamme, spécialement un procédé de pulvérisation de fil et/ou un procédé de pulvérisation de poudre, ou un autre procédé de pulvérisation thermique.

15. Utilisation d'un matériau selon l'une des revendications 1 à 3 pour revêtir par un procédé de pulvérisation thermique une surface d'une pièce en oeuvre.

16. Pièce en oeuvre, en particulier tôle métallique de grande surface, spécialement tôle en aluminium et/ou en fer et/ou en acier et/ou en un métal et/ou en un alliage métallique et/ou en un autre matériau (5), revêtue d'un matériau selon l'une des revendications 1 à 3 et d'un revêtement selon l'une des revendications 4 à 7.
